# EUROPÄISCHE PATENTSCHRIFT

(11) **EP 0 659 289 B1**
(45) Veröffentlichungstag und Bekanntmachung des Hinweises auf die Patenterteilung: **24.07.1996**
(21) Anmeldenummer: 93918950.2
(22) Anmeldetag: 07.09.1993
(51) Int. Cl.: G05B 19/042, G01K 1/02

(54) **ANORDNUNG MIT MEHREREN ANALOGEINGABEEINHEITEN**
ARRANGEMENT WITH SEVERAL ANALOG INPUT UNITS
AGENCEMENT COMPORTANT PLUSIEURS UNITES D'ENTREE ANALOGIQUE

(30) Priorität: 10.09.1992 DE 9212230 U
(43) Veröffentlichungstag der Anmeldung: 28.06.1995
(73) Patentinhaber: SIEMENS AKTIENGESELLSCHAFT, 80333 München (DE)
(72) Erfinder: FLÄMIG, Hartmut, D-76227 Karlsruhe (DE); NICKLIS, Rainer, D-76835 Gleisweiler (DE)
(86) Internationale Anmeldenummer: DE9300813
(87) Internationale Veröffentlichungsnummer: WO9406064

(56) Entgegenhaltungen:
- DE-A- 2 822 893
- DE-A- 3 313 043
- GB-A- 2 010 487
- TOUTE L'ELECTRONIQUE Nr. 485 , 1983 , PARIS FR Seiten 47 - 51 'Semiconducteurs et mesures de température'
- SIEMENS ENERGY & AUTOMATION Bd. 11 , September 1989 , BERLIN DE Seiten 68 - 70 XP66317 SIEGFRIED OBLASSER 'Intelligent I/O Modules : Increased Performance through Task Sharing'

## Beschreibung

Die Erfindung betrifft eine Anordnung gemäß dem Oberbegriff des Anspruchs 1.

Eine derartige Anordnung ist aus dem Siemens-Handbuch "U-Peripherie", Reg. 5 "SIMATIC S5 - Analogeingabe-, -ausgabebaugruppen", Ausgabe 1990, bekannt. Die Baugruppen sind als steckbare Flachbaugruppen ausgebildet und über einen Adreß-, Daten- und Steuerleitungen aufweisenden Bus mit einer Zentralbaugruppe verbunden. Ein Sensor in Form eines Thermoelementes ist zur Überwachung der Temperatur eines zu steuernden technischen Prozesses vorgesehen, dessen Meßspannung einer Analogeingabebaugruppe zugeführt wird. Diese weist ein Meßbereichsmodul zur Anpassung des Meßbereichs der Eingabebaugruppe an den Meßbereich des Meßsignals auf, das über einen dem Meßbereichsmodul nachgeschalteten Multiplexer einem Analog/ Digital-Wandler aufgeschaltet wird, welcher die analogen Meßwerte in digitale Werte zur weiteren Verarbeitung durch den Zentralprozessor umformt. An die Analogeingabebaugruppe können bis zu vier Thermoelemente und eine sogenannte Kompensationsdose in Form einer aus Widerständen gebildeten Brückenschaltung angeschlossen werden, die Schwankungen der für den Betrieb der Thermoelemente notwendigen Vergleichstemperatur dadurch kompensiert, daß sie durch die Schwankungen der Vergleichstemperatur bedingte Änderungen der Thermospannungen der Thermoelemente aufhebt. Für jede Analogeingabebaugruppe ist eine Kompensationsdose mit dazugehörigem Netzteil erforderlich.

Der vorliegenden Erfindung liegt die Aufgabe zugrunde, eine Anordnung der eingangs genannten Art zu schaffen, in welcher der Aufwand für die Erfassung von Vergleichsgrößen, z. B. von Vergleichstemperaturen, verringert ist.

Diese Aufgabe wird durch die im kennzeichnenden Teil des Anspruchs 1 angegebenen Maßnahmen gelöst.

Die Erfindung geht von der Idee aus, die Vergleichsgröße, z. B. Vergleichstemperatur, nur einmal zu erfassen, wodurch nur ein Vergleichssensor erforderlich ist. Dazu arbeitet eine Analogeingabeeinheit in der ersten Betriebsart, während deren sie die Vergleichsstellentemperatur erfaßt und anderen, in die zweite Betriebsart geschalteten Einheiten bereitstellt. Im Falle der Messung von Temperaturen ermitteln daher sowohl die in die erste als auch die in die zweite Betriebsart geschalteten Einheiten die Temperaturen aus der Vergleichsstellentemperatur und den von den jeweiligen Sensoren gelieferten Temperaturdifferenzen aus Meßstellen- und Vergleichsstellentemperatur. Eine Kompensationsdose mit dazugehörigem Netzteil wird nur an die in die erste Betriebsart geschaltete Einheit angeschlossen.

Weitere vorteilhafte Ausgestaltungen der Erfindung ergeben sich aus den Unteransprüchen.

Anhand der Zeichnung, in der zwei Ausführungsbeispiele der Erfindung veranschaulicht sind, werden die Erfindung, deren Ausgestaltungen sowie Vorteile näher erläutert.

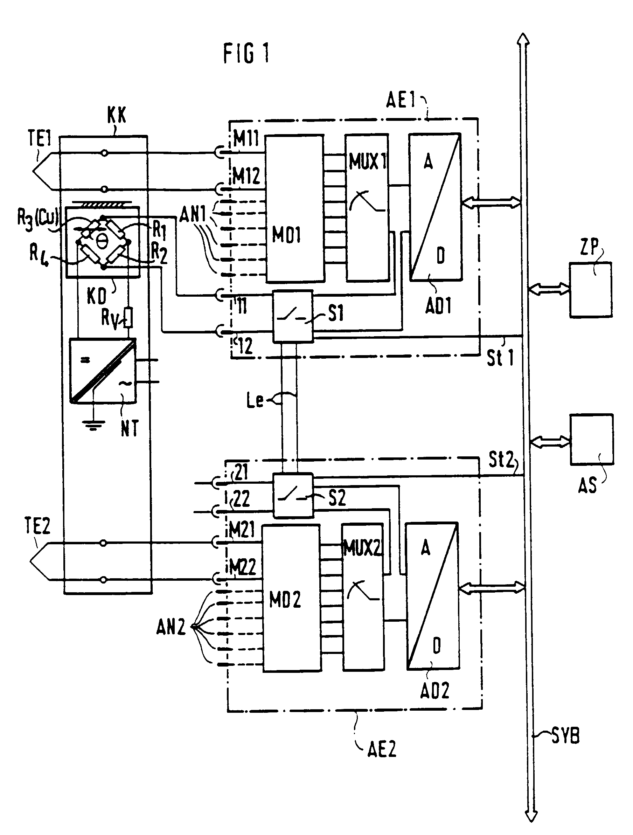

Figur 1 zeigt in einem ersten Ausführungsbeispiel ein Prinzipschaltbild eines Automatisierungsgerätes mit zwei Analogeingabeeinheiten AE1, AE2, die über einen Adreß-, Daten- und Steuerleitungen aufweisenden Systembus SYB mit einem Zentralprozessor ZP und einem Arbeitsspeicher AS verbunden sind. Andere Funktionseinheiten des Automatisierungsgerätes, wie z. B. weitere Prozessoren oder Digitaleingabe- und -ausgabeeinheiten, und Synchronisationsmittel sind für die Erfindung ohne Bedeutung und in der Figur nicht dargestellt. An Anschlüsse M11, M12, M21, M22 der Analogeingabeeinheiten AE1, AE2 sind über einen gemeinsamen Klemmkasten KK Thermoelemente TE1, TE2 angeschlossen, die an Meßstellen angeordnet sind und jeweils eine Thermospannung abgeben, welche nicht der absoluten Temperatur, sondern der Temperaturdifferenz aus der Meßstellentemperatur und einer Vergleichsstellentemperatur entspricht. Zur Bestimmung der absoluten Meßstellentemperatur ist es deshalb erforderlich, auch die Vergleichsstellentemperatur, z. B. die Temperatur im Klemmkasten KK, zu erfassen. Hierzu ist eine auf der Vergleichsstellentemperatur liegende Kompensationsdose KD vorhanden, die eine aus vier Widerständen R₁, R₂, R₃, R₄ gebildete Brückenschaltung aufweist, von denen der Widerstand R₃ temperaturabhängig ist. Ein Netzteil NT versorgt über einen Vorwiderstand Rᵥ die Brückenschaltung mit einer geeigneten Spannung. Die Analogeingabeeinheiten AE1, AE2 weisen weitere Anschlüsse AN1, AN2 auf, an welche weitere Thermoelemente anschließbar sind, deren Meßsignale ebenso wie die der Thermoelemente TE1, TE2 über Meßbereichsmodule MD1, MD2 Multiplexern MUX1, MUX2 zugeführt sind. Diese Module MD1, MD2 passen den Meßbereich der Analogeingabeeinheiten AE1, AE2 dem Bereich der Meßsignale der Thermoelemente TE1, TE2 an. Ihre Ausgangssignale führen Multiplexer MUX1, MUX2 A/D-Wandlern AD1, AD2 zu. Der Zentralprozessor ZP schaltet nach Maßgabe eines im Arbeitsspeicher AS hinterlegten Programms über Steuerleitungen Stl, St2 mittels steuerbarer Schalter S1, S2 die Analogeingabeeinheiten AE1, AE2 in eine erste, aktive oder eine zweite, passive Betriebsart. In der aktiven Betriebsart leitet der Schalter S1 bzw. S2 die der Vergleichsstellentemperatur entsprechende Vergleichsspannung, die an den Anschlüssen Mll, M12 anliegt, an den A/D-Wandler AD1 bzw. AD2 und über Leitungen Le an den Schalter S2 bzw. S1. In der passiven Betriebsart dagegen verbindet der Schalter S1 bzw. S2 nicht die Klemmen 21, 22, sondern die Leitungen Le mit dem A/D-Wandler AD1 bzw. AD2, wodurch beiden A/D-Wandlern dieselbe Vergleichsspannung zugeführt wird. Da im vorliegenden Beispiel die Kompensationsdose KD zur Erfassung der Vergleichsstellentemperatur an die Analogeingabeeinheit AE1 angeschlossen ist, muß diese in die aktive Betriebsart, dagegen die Analogeingabeeinheit AE2 in die passive Betriebsart geschaltet sein.
Es ist selbstverständlich möglich, die Betriebsarten auch mit einem entsprechenden durch den Zentralprozessor ZP an die Analogeingabeeinheiten AE1, AE2 gesendeten Parameterbit oder Protokolldatum einzustellen.

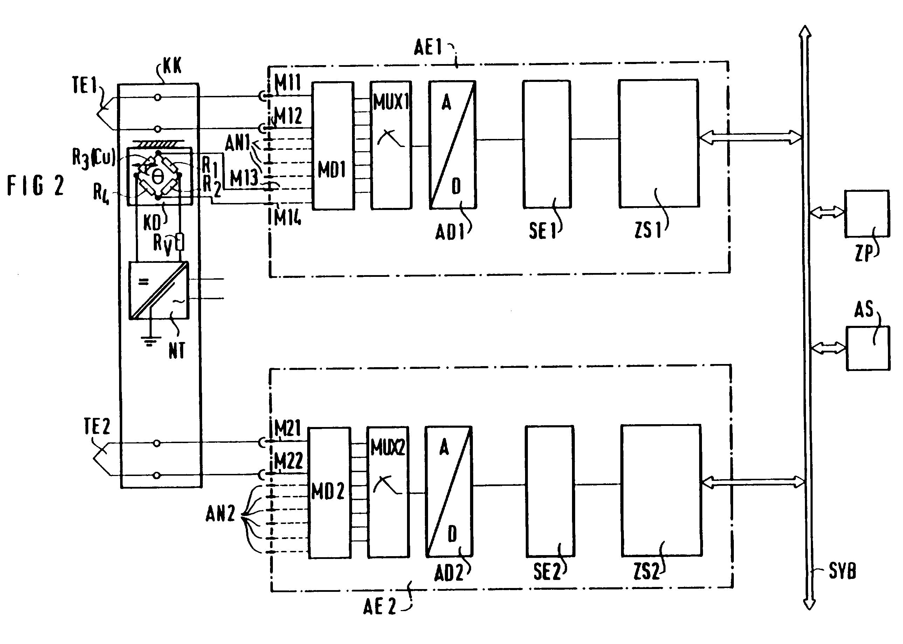

Figur 2 zeigt in einem zweiten Ausführungsbeispiel der Erfindung ebenfalls ein Prinzipschaltbild eines Automatisierungsgerätes, wobei die in den Figuren 1 und 2 vorkommenden gleichen Teile mit gleichen Bezugszeichen versehen sind. Für jede Analogeingabeeinheit AE1, AE2 ist eine Steuereinheit SE1, SE2 und ein Zwischenspeicher ZS1, ZS2 vorgesehen. Die Steuereinheit SE1 der in die erste Betriebsart geschalteten Analogeingabeeinheit AE1 schreibt nach zuvor erfolgter A/D-Wandlung des an Anschlüssen M13, M14 anliegenden Vergleichsstellenmeßwertes in den ihr zugeordneten Zwischenspeicher ZS1 die Vergleichsstellentemperatur ein, welche der Zentralprozessor ZP ausliest und in den Zwischenspeicher ZS2 der in die zweite Betriebsart geschalteten Analogeingabeeinheit AE2 einschreibt. Die Steuereinheit SE2 liest den Temperaturwert aus dem Zwischenspeicher ZS2 aus und ermittelt aus dieser Vergleichsstellentemperatur und der entsprechenden Thermospannung des Thermoelementes TE2 die absolute Meßstellentemperatur. Auf die Leitungen Le, St1, St2 sowie die Schalter S1, S2 (Figur 1) kann im vorliegenden zweiten Ausführungsbeispiel verzichtet werden, und die Einstellungen bzw. Datentransfers können über den Systembus SYB erfolgen.

Die Erfindung wurde.anhand von Ausführungsbeispielen beschrieben, bei denen Thermoelemente zur Erfassung von Meßstellentemperaturen verwendet sind. Sie ist jedoch überall dort einsetzbar, wo zusätzlich zu Meßgrößen eine Vergleichsgröße zur Korrektur der Meßgröße erfaßt wird.

## Patentansprüche

1. Anordnung mit mehreren Analogeingabeeinheiten (AE1, AE2), an die an Meßstellen und an einer Vergleichsstelle angebrachte Sensoren (TE1, TE2, KD) anschließbar sind und welche Meßgrößen aus den Signalen der Meßstellensensoren und dem Signal des Vergleichsstellensensors ermitteln,
**dadurch gekennzeichnet,**
- daß die Einheiten (AE1, AE2) jeweils in eine erste und in eine zweite Betriebsart schaltbar sind,
- daß eine der Einheiten (AE1) in der ersten Betriebsart das Signal des Vergleichsstellensensors (KD) erfaßt und an die anderen Einheiten (AE2) weiterleitet und
- daß die anderen Einheiten (AE2) in der zweiten Betriebsart das Signal des Vergleichsstellensensors (KD) empfangen.

2. Anordnung nach Anspruch 1, **dadurch gekennzeichnet,** daß die Meßstellensensoren Thermoelemente sind und der Vergleichsstellensensor ein Widerstandsthermometer ist.

3. Anordnung nach Anspruch 1 oder 2, **dadurch gekennzeichnet,** daß ein Zentralprozessor (ZP) die Betriebsarten der Analogeingabeeinheiten (AE1, AE2) einstellt.

## Claims

1. Arrangement having several analog input units (AE1, AE2) to which sensors (TE1, TE2, KD) applied to measuring points and to a reference point can be connected and which determine measured variables from the signals of the measuring point sensors and the signal of the reference point sensor, characterized in that
- the units (AE1, AE2) are each connectable into a first and into a second operating mode,
- one of the units (AE1) in the first operating mode detects the signal of the reference point sensor (KD) and relays it to the other units (AE2) and
- the other units (AE2) in the second operating mode receive the signal of the reference point sensor (KD).

2. Arrangement according to claim 1,
characterized in that the measuring point sensors are thermal elements and the reference point sensor is a resistance thermometer.

3. Arrangement according to claim 1 or 2,
characterized in that a central processor (ZP) adjusts the operating modes of the analog input units (AE1, AE2).

## Revendications

1. Dispositif comportant plusieurs unités (M1, AE2) d'introduction analogique, auxquelles des capteurs (TE1, TE2, KD) mis en place en des points de mesure et en un point de comparaison peuvent être connectés et qui déterminent des grandeurs de mesure à partir des signaux des capteurs des points de mesure et du signal du capteur des points de comparaison,
caractérisé en ce que
- les unités (AE1,AE2) peuvent être branchées chacune dans un premier et dans un second modes de fonctionnement,
- l'une (AE1) des unités détecte, dans le premier mode de fonctionnement, le signal du capteur (KD) du point de comparaison et le retransmet aux autres unités (AE2), et
- les autres unités (AE2) reçoivent, dans le second mode de fonctionnement, le signal du capteur (KD) du point de comparaison.

2. Dispositif suivant la revendication 1, caractérisé en ce que les capteurs des points de mesure sont des thermocouples et le capteur du point de comparaison est un thermomètre à résistance électrique.

3. Dispositif suivant la revendication 1 ou 2, caractérisé en ce qu'un processeur (ZP) central établit les modes de fonctionnement des unités (AE1, AE2) d'introduction analogique.
